(19) Europäisches Patentamt
European Patent Office
Office européen des brevets

(11) **EP 2 227 371 B1**

(12) **EUROPEAN PATENT SPECIFICATION**

(45) Date of publication and mention
of the grant of the patent:
**21.11.2012   Bulletin 2012/47**

(21) Application number: **08807028.9**

(22) Date of filing: **10.09.2008**

(51) Int Cl.:
***B29C 65/08*** (2006.01)

(86) International application number:
**PCT/IB2008/002337**

(87) International publication number:
**WO 2009/034443 (19.03.2009 Gazette 2009/12)**

(54) **ROTARY HORN FOR ULTRASONIC WELDING**

**DREHHORN ZUM ULTRASCHALLSCHWEISSEN**

**PAVILLON ROTATIF POUR SOUDAGE PAR ULTRASONS**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.09.2007   IT MI20071772**

(43) Date of publication of application:
**15.09.2010   Bulletin 2010/37**

(73) Proprietor: **Startec S.r.l.**
**20047 Brugherio (MI) (IT)**

(72) Inventors:
• **MONTI, Massimiliano**
**I-21040 Gerenzano (VA) (IT)**
• **SALA, Walter**
**I-20041 Agrate Brianza (MI) (IT)**

(74) Representative: **Di Bernardo, Antonio et al**
**Praxi Intellectual Property S.p.A.**
**Via Mario Pagano, 69/A**
**20145 Milano (IT)**

(56) References cited:
**WO-A-94/14583          US-A- 3 017 792**
**US-A- 5 087 320        US-A- 5 096 532**
**US-A1- 2003 111 156    US-A1- 2004 118 901**

## Description

The present invention relates to a horn for ultrasonic welding according to the preamble of claim 1.

The invention is especially suited to the field of machines for ultrasonic welding of plastic and textile materials or for generating cavitation in liquids, and in general to all those applications where radial vibration relative to the horn rotation direction is required.

As known, these machines comprise a converter that, through a piezoelectric device or the like, turns an electric signal having a frequency within the ultrasonic range (typically 15 to 60 kHz) into ultrasonic mechanic vibrations, and a horn connected to the converter, which vibrates on two adjacent portions of plastic material, thus welding them together.

Horns may be either stationary (as described in patent application EP 0 468 125) or rotary (as described in patent application EP0 457 187).

The present invention relates to rotary horns, i.e. components comprising a substantially discoidal body which is rotated on two portions of plastic material to be welded.

One of the most important drawbacks suffered by currently known rotary horns lies in the fact that it is difficult to manufacture devices capable of vibrating at the desired frequency in order to obtain an effective transmission of the excitation energy to the plastic material to be welded.

Once the material of the horn has been determined (aluminium, titanium, steel, or alloys thereof), its resonance frequency, i.e. the frequency at which vibration amplitude is highest, largely depends on the machining of the two opposing faces of the discoidal body. Compared to an ideal shape, the horn vibration amplitude may be changed radically by milling just a few tenths of a millimeter of material from the faces of the rotary body.

Any variation, even a minimal one, of the disc profile as well as the distribution of the masses on the disc, and on the hub will generate very different effects in terms of the obtainable welding.

A type of horn known in the art is described in the above-mentioned document EP 0 457 187.

The discs described in patent EP 0 457 187 are characterized by having flat or generally concave side faces joined to a hub located around the axis of rotation of the disc.

Horns manufactured in accordance with the teachings of patent application EP 0 457 187 have shown some limits at the vibration frequency of 35 kHz, i.e. the frequency that is mostly used in industrial horn applications, which limits are related to the rather low amplitude of the vibration of the welding surface, the latter also being uneven along the width of the strip that constitutes said surface: this leads to the impossibility of using known horns as disclosed by EP 0 457 187 for industrial applications.

US Patent n. US3017792 discloses a vibratory device comprising a transducer which converts RF energy into elastic vibration causing vibration of a resonant tip. The resonant tip is constituted by a discoidal body connected to the transducer via a coupler having length equal to half the wavelength of the vibration.

The technical problem at the basis of the present invention is therefore to improve this state of the art.

The solution to this problem was conceived after many laboratory tests that showed the extremely important role played by the profile of the side faces of the horn disc as far as vibration amplitude and vibration uniformity are concerned.

In particular, the Applicant surprisingly observed that the performance of the horn improves significantly when the thickness of its discoidal body is minimal in the area where it is joined to the hub, or in the proximity thereof.

The above-mentioned technical problem is therefore solved by a rotary horn having the features set out in claim 1.

These and further features of the invention, as well as their advantageous effects, will become more apparent from the following description and from the annexed drawings, which are supplied by way of non-limiting example, wherein:

Fig. 1 shows a schematically representation of an ultrasonic welding machine;

Figs. 2 and 3 are sectional and side views, respectively, of a horn;

Figs. 4, 5 and 6 are respective diametral sectional views of horns, in particular figures 5 and 6 show horns according to the present invention;

Fig. 7 is a sectional view of a horn according to the prior art.

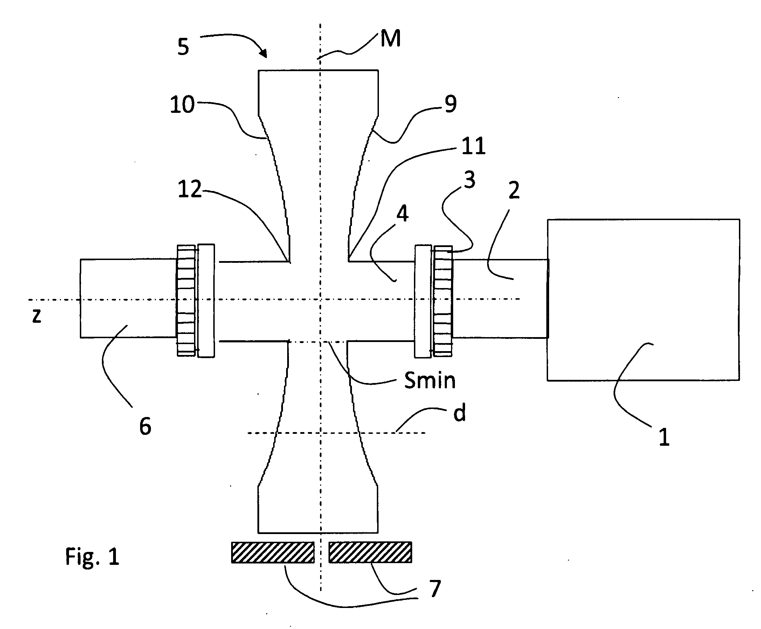

Referring now to Fig. 1, there is shown a welding machine, which comprises a per se known converter I supported in a manner such that it can turn (through bearings not shown in Fig. 1) relative to a horizontal axis of rotation Z and generate ultrasonic vibrations at the typical frequencies of industrial applications, in particular around 35 kHz.

Converter 1 generates ultrasonic vibrations and is provided in this example with an integral shaft 2, on which a toothed wheel 3 is fitted together; the latter is connected to a motor, preferably an electric one, through a drive belt or gear transmission or the like for rotating shaft 2 and converter 1 about a horizontal axis of rotation Z. For simplicity's sake, the motor and transmission are not shown in the drawings.

Of course, the solutions adopted for rotating converter 1 may be different from the system employing a toothed wheel 3 and an associated transmission; furthermore, shaft 2 may be absent in certain designs including only converter 1.

Shaft 2 is connected to hub 4 of a horn 5; this connection may be a threaded one or any other suitable type of connection known in the art.

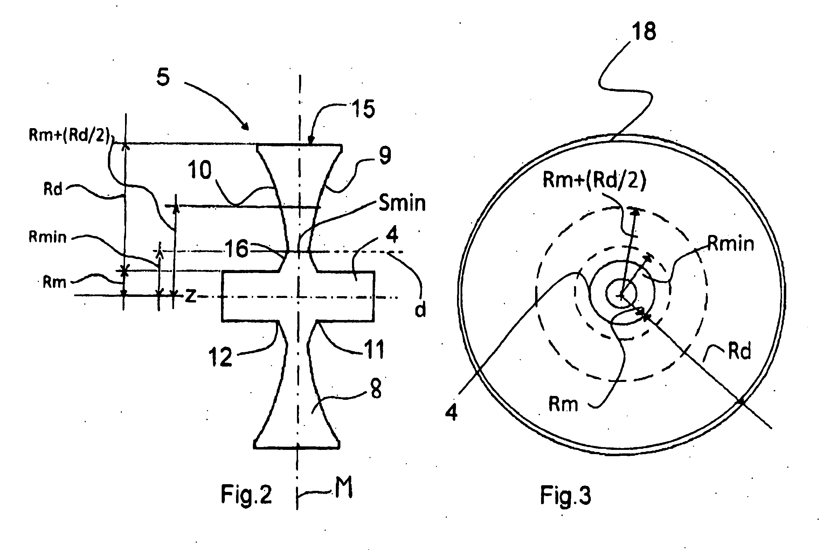

Figs. 1 and 2 show a diametral section of the horn (with no hatching) that highlights the profile of its outer faces, which will be further described later on.

Hub 4 also extends on the side of horn 5 opposite to converter 1, symmetrically with reference to a median plane M; in the illustrated example, the portion of hub 4 located on the side opposite to converter 1 is connected to a counterweight 6 used as a balancing member: the latter is however an optional element, since it may be omitted.

Horn 5 has a discoidal body 8 with concave outer faces 9, 10 opposing each other along the axis of rotation Z and symmetrical with respect to the median plane M; faces 9, 10 extend radially from hub 4 at respective connecting edges 11 and 12, up to a peripheral welding surface 15 consisting of a cylindrical strip coaxial to the axis of rotation of the horn.

Surface 15 is that portion of horn 5 which comes in contact with material 7 to be welded, which may consist of elements made of plastic, fabric or the like, according to the different applications of the horn mentioned above; it has a thickness 18 that depends on the profile of outer faces 9 and 10.

In fact, as shown in the drawings, the thickness in the axial direction (i.e. parallel to Z axis) of discoidal body 8 of the horn changes as a function of the radial distance from axis of rotation Z.

In particular, thickness S being defined at a certain point as the distance between faces 9, 10 along a direction d which is parallel to the axis of rotation Z and passing by that point, it can be seen that the thickness of the disc body has a minimum value $S_{min}$.

In accordance with the invention, minimum thickness $S_{min}$ of discoidal body 8 must be located at a distance from connecting edges 11, 12 of faces 9, 10 which is shorter than half the radial extension of faces 9 and 10 of disc 8.

Thus, for example, in Fig. 1 minimum thickness $S_{min}$ of discoidal body 8 of the horn is located at edges 11 and 12 that connect its faces to hub 4; moving radially outwards, i.e. towards welding surface 15, thickness S of discoidal body 8 increases according to a law that depends on the concave profile of faces 9, 10.

The minimum thickness $S_{min}$ of the discoidal body may however be at a distance from hub 4, as shown in Fig. 2, wherein a tapered portion 16 of the body of disc 8 extends from connecting edges 11, 12 of its outer faces 9 and 10, up to the point of minimum thickness $S_{min}$ defined by a radius $R_{min}$.

In general, the Applicant observed that, surprisingly, the performance of the horn improves as minimum thickness $S_{min}$ of discoidal body 8 approaches connecting edges 11, 12 of outer faces 9, 10; such minimum value must not in any case be greater than half the radial extension ($R_d/2$) of the outer faces from edges 11, 12 connecting them to hub 4.

In geometrical terms, assuming that $R_m$ is the radius of hub 4, $R_d$ is the radial width of body 8 of the disc (and of faces 9, 10 thereof), and $R_{min}$ is the distance of the points of the minimum thickness of the disc body, the above condition can be expressed as follows: $R_{min} < R_m + R_d/2$.

This is always true, whether faces 9, 10 have a curvilinear profile, as in Figs. 1 and 2, or a straight profile, as will be further described below; furthermore, the Applicant observed that this effect is not dependent on the length of hub 4: in fact, said length may be equal to, greater than or even shorter than the width of welding surface 15.

Horns manufactured according to figures 1-6 have shown vibration amplitudes highly superior to those of horns as described in European patent application EP 0 457 187. As a matter of fact, the latter describes horns having flat or generally concave outer faces, wherein the points of minimum thickness of the disc body are distant from the edge that connects the faces to the hub (if present).

It follows that the vibrations obtained with these known horns, apart from having rather small amplitudes, are also uneven over the welding surface, i.e. they are not homogeneous over the entire strip width.

Therefore, these known horns cannot de facto be used for industrial applications.

Of course, it is possible to provide horn variants.

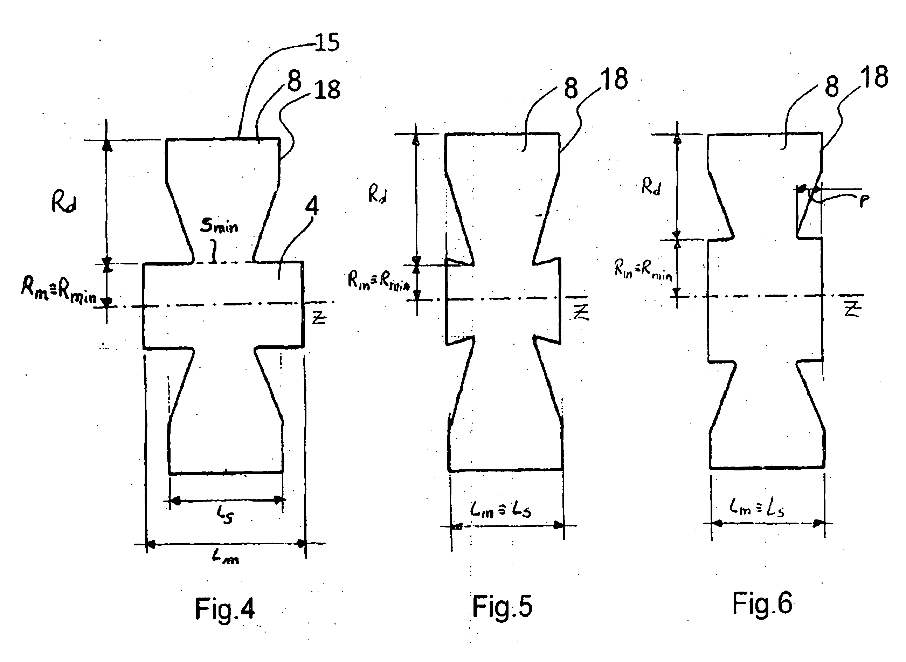

For example, in addition to the configurations shown in Figs. 1 and 2, wherein minimum thickness $S_{min}$ is at connecting edges 11, 12 of concave faces 9 and 10, or downstream of tapered surface 16, it is also possible to manufacture horns with outer faces 9, 10 having a straight profile diverging towards welding surface 15, as shown in Figs. 4-6.

In these variants, radial thickness 18 of peripheral welding surface 15 has been intentionally increased compared to the previous examples, so that laterally it becomes a non-negligible portion of outer faces 9, 10 of the horn.

The Applicant carried out a number of tests for comparing the horns of Figs. 4, 5 and 6 with some of the horns disclosed by the above-mentioned European patent application EP 0 457 187; the results of said tests are reported below.

The tests were carried out by using the following fixed parameters: frequency 35,000 Hz, outer diameter 90 mm; maximum depth P of the concave face with respect to its plane projection 7,5 mm; hub radius $R_m = 11.5$ mm; welding surface width $L_s$ 32 mm; material used: "anticorodal 00" aluminium alloy.

Starting from horns according to patent EP 0 457 187 (in particular from the one of Fig. 15-16 in this document), a sample prepared with these dimensional characteristics had a resonance frequency of 37,950 Hz, which is not compatible with the operating frequency of 35,000 Hz of industrial ultrasonic generators used for welding plastic materials (in these applications, tolerances range goes from about 34,600 Hz to about 35,600 Hz).

Therefore, another sample of a horn according to EP 0 457 187 was made with an outer diameter of 120 mm; this second sample however has a resonance frequency of 31,500 Hz, again outside the normal operating range of ultrasonic generators.

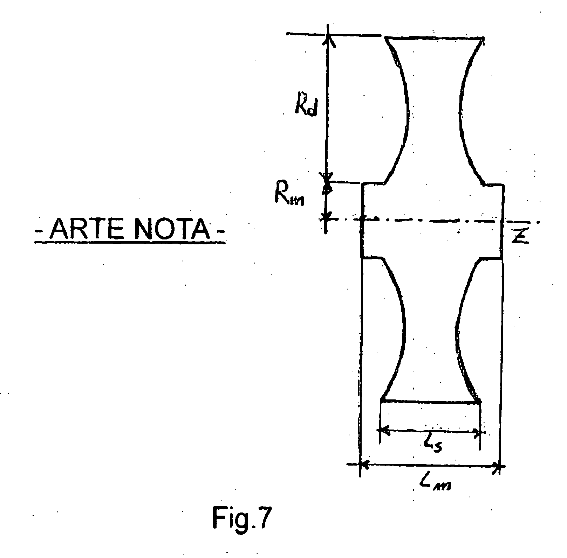

The horn of Fig. 7 was then prepared, still by following the teachings of patent EP 0 457 187, which horn had a resonance frequency of 35,450 Hz and could therefore be used for a comparative test.

The dimensions of this sample of Fig. 7 were as follows:

$$Rm = 11.5 \text{ mm}$$

$$Rd = 43.5 \text{ mm}$$

$$Lm = 45 \text{ mm}$$

$$Ls = 32 \text{ mm}$$

Moreover, the radius of curvature of the concave outer faces was 32 mm.

A horn like the one of Fig. 4 was then made, wherein the minimum thickness $S_{min}$ of discoidal body 8 is located at edges 11, 12 that connect it to hub 4: it follows that, according to the above specifications, in this case $R_{min}$ is equal to $R_m$ (where $R_{min}$ is the distance between the minimum thickness and the axis of rotation Z, whereas $R_m$ is the radius of hub 4).

The dimensions of the horn, as shown in Fig. 4 are as follows:

$$R_m = 11.5 \text{ mm}$$

$$R_d = 33.5 \text{ mm}$$

$$L_m = 45 \text{ mm}$$

$$L_s = 32 \text{ mm}$$

By applying ultrasound having a frequency of 35,000 Hz to the tested horns, the vibration amplitudes at three points of welding surface 15 were measured: two points on opposite sides with respect to median plane M, and one point lying in said plane.

The detected vibration amplitudes were as shown in Table 1, wherein values are expressed in microns:

*Table 1*

|  | Point a | Point b | Point c |
|---|---|---|---|
| Horn according to EP 0 457 187 (Fig. 7) | 10 | 3 | 8 |
| Horn according to Fig. 4 | 24 | 24 | 24 |

These values show that the horn according to fig. 4 has high vibration uniformity and amplitude.

On the contrary, the horn according to EP 0 457 187 has non-uniform vibration with reduced amplitude, which does not allow to obtain a proper welding and may even adversely affect the life of the horn itself, which is potentially more exposed to the risk of failure due to non-uniform vibration.

The good results achieved by the above sample of a horn according to fig. 4 were subsequently confirmed by other samples as shown in Figs. 5 and 6, on which further tests were carried out.

In particular, Fig. 5 shows an advantageous design of a horn 5 according to the invention, wherein hub 4 has a truncated-cone shape growing larger towards its free ends; as the drawing clearly shows, minimum thickness $S_{min}$ of the disc is found at connecting edges 11, 12 of faces 9, 10 of discoidal body 8, i.e. at a distance $R_{min}$ from axis of rotation Z which is shorter that radius $R_m$ of hub 4 ($R_{min} < R_m$).

In addition, hub 4 has in this case a length $L_m$ equal to the width $L_s$ of welding surface 15.

Fig. 6 shows a horn design according to the invention wherein hub 4 has a cylindrical shape having a constant radius Rm, and wherein the minimum thickness radius of the disc is located immediately past radius Rm itself.

The dimensions of the horn of Fig. 5 are as follows:

$$R_m = 9.5 \text{ mm}$$

$$R_d = 35.5 \text{ mm}$$

$$L_m = Ls = 32 \text{ mm}$$

Whereas those of the horn of Fig. 6 are as follows:

$$R_m = 16.5 \text{ mm}$$

$$R_d = 28.5 \text{ mm}$$

$$L_m = L_s = 32 \text{ mm}$$

These two horn samples according to the invention were subjected to laboratory tests similar to those described above (i.e. with excitation at 35,000 Hz); the results obtained are reported in Table 2, which indicates the vibration amplitude values (expressed in microns) measured at three points of welding surface 15, i.e. along the opposite edges with respect to median plane P and at said plane.

*Table 2*

|                 | Point a | Point b | Point c |
|-----------------|---------|---------|---------|
| Horn of Fig. 5  | 40      | 40      | 40      |
| Horn of Fig. 6  | 28      | 28      | 28      |

In these cases as well, it can be noted that the vibration of the horns is uniform over the entire width of their welding surface 15, and that the vibration amplitude value is higher than that of the known horn of Fig. 7 that was tested previously.

As aforementioned, vibration uniformity is advantageously reflected not only in the welding quality, but also in the strength of the horn, while signal amplification affects efficiency.

From the above description it can be understood that, the performance of the horn improves when outer faces 9, 10 are profiled in a manner such that minimum thickness $S_{min}$ of the body of disc 8 is closest to connecting edges 11, 12, and in any case not farther than half the radial width ($R_d/2$) of the discoidal body. Within the frame of this teaching, horns may thus be manufactured with faces having a curved or straight profile, like those illustrated in the annexed drawings, or featuring a combination of said profiles.

**Claims**

1. Horn (5) for ultrasonic welding, comprising a discoidal body (8) adapted to rotate about an axis (Z) and having a pair of opposing outer faces (9, 10), the distance between which in a direction (d) parallel to the axis of rotation (Z) defines the thickness (S) at one point of the discoidal body, said faces extending radially between respective edges (11, 12) connecting them to a hub (4) and a peripheral welding surface (15), the minimum thickness ($S_{min}$) of the discoidal body being located at a radial distance from the edges (11, 12) that connect the side faces (9, 10) to the hub (4) which is shorter than half the radial extension ($R_d$) of the faces themselves
said discoidal body (8) is symmetrical with respect to a median plane (M),
the minimum thickness ($S_{min}$) of the discoidal body (8) being located substantially at the edges (11, 12) that connect the side faces (9, 10) to the hub (4),
the outer faces (9,10) having a sectional profile which is straight and diverging starting from the minimum thickness ($S_{min}$) towards the peripheral welding surface (15).
the hub (4) has a length ($L_m$) which is substantially equal to the width ($L_s$) of the peripheral welding surface (15).

2. Horn according to claim 1, wherein the thickness (S) of the discoidal body (8) increases radially outwards over the minimum thickness ($S_{min}$), up to a value corresponding to the width of the peripheral welding surface (15).

3. Horn according to any of claims 1 or 2, wherein the thickness (18) of the peripheral welding surface (15) is a portion of the outer faces (9, 10) of the discoidal body (8).

4. Horn according to any of the preceding claims, wherein the hub (4) has a cylindrical shape having a constant radius.

5. Horn according to claim 4, wherein each face of said discoidal body has a a diameter of 45mm and the minimum thickness (Smin) of the discoidal body is located at 16.5 mm from the axis of rotation, and wherein said welding surfaces have a length of 32 mm.

6. Horn according to any of claims I to 4-3, wherein the hub (4) has a truncated-cone shape growing larger towards the free ends of the hub (4).

7. Horn according to claim 6, wherein each face of said discoidal body has a a diameter of 45mm and the minimum thickness (Smin) of the discoidal body is located at 9.5 mm from the axis of rotation, and wherein said welding surfaces have a length of 32 mm.

**Patentansprüche**

1. Horn zum Ultraschallschweißen, aufweisend einen scheibenförmigen Körper (8), der eingerichtet ist, um eine Achse (Z) zu rotieren, mit einem Paar einander gegenüberliegenden äußeren Flächen (9, 10), deren Abstand zueinander in Richtung (d) parallel zur Rotationsachse (Z) die Dicke (S) an einem jeweiligen Punkt des scheibenförmigen Körpers bestimmt, wobei die Flächen sich radial zwischen zugeordneten Kanten (11, 12), welche diese mit einer Nabe (4) verbinden, und einer peripherisch angeordneten Schweißoberfläche (15) erstrecken, wobei die Mindestdicke ($S_{min}$) des scheibenförmigen Körpers, welche geringer ist als die Hälfte der radialen Erstreckung (R4) der Flächen selbst, auf einem radialen Abstand zu den Kanten (11, 12) angeordnet ist, welche die seitlichen Flächen (9, 10) mit der Nabe (4) verbinden, wobei der scheibenförmige Körper (8) symmetrisch in Bezug zu einer Mittelebene (M) ist, die Mindestdicke ($S_{min}$) des scheibenförmigen Körpers (8) im Wesentlichen an den Kanten (11, 12) angeordnet ist, welche die seitlichen Flächen (9, 10) mit der Nabe (4) verbinden, und die äußeren Flächen (9, 10) ein Querschnittsprofil haben, das gerade und auseinanderlaufend ist, ausgehend von der Mindestdicke ($S_{min}$) in Richtung der peripherischen Schweißoberfläche (15),
**dadurch gekennzeichnet, dass** die Nabe (4) eine Länge ($L_m$) hat, welche im Wesentlichen gleich zur Breite ($L_s$) der peripherischen Schweißoberfläche (15) ist.

2. Horn nach Anspruch 1,
wobei die Dicke (S) des scheibenförmigen Körpers (8) sich radial nach außen von der Mindestdicke ($S_{min}$) bis zu einem Wert erhöht, welcher der Breite der peripherischen Schweißoberfläche (15) entspricht.

3. Horn nach einem der Ansprüche 1 und 2,
wobei die Dicke (18) der peripherischen Schweißoberfläche (15) ein Teil der äußeren Flächen (9, 10) des scheibenförmigen Körpers (8) ist.

**4.** Horn nach einem der vorhergehenden Ansprüche,
wobei die Nabe (4) eine zylindrische Form mit einem konstanten Radius aufweist.

**5.** Horn nach Anspruch 4,
wobei jede Fläche des scheibenförmigen Körpers einen Durchmesser von 45 mm hat und die Mindestdicke ($S_{min}$) des scheibenförmigen Körpers bei 16,5 mm von der Rotationsachse liegt, und wobei die Schweißoberfläche eine Länge von 32 mm aufweist.

**6.** Horn nach einem der Ansprüche 1 bis 3,
wobei die Nabe (4) eine kegelstumpfförmige Form aufweist, welche in Richtung der freien Enden der Nabe (4) zunimmt.

**7.** Horn nach Anspruch 6,
wobei jede Fläche des besagten scheibenförmigen Körpers einen Durchmesser von 45 mm hat und die Mindestdicke ($S_{min}$) des scheibenförmigen Körpers bei 9,5 mm Abstand von der Rotationsachse liegt, wobei die Schweißoberfläche eine Länge von 32 mm aufweist.

**Revendications**

**1.** Sonotrode (5) pour soudage par ultrasons, comprenant un corps discoïde (8) agencé pour tourner autour d'un axe (Z) et ayant deux faces externes opposées (9, 10), la distance entre les deux dans une direction (d) parallèle à l'axe de rotation (Z) définit l'épaisseur (S) à un point du corps discoïde, lesdites faces s'étendant radialement entre des bords (11, 12) respectifs les reliant à un moyeu (4) et une surface de soudage périphérique (15), l'épaisseur minimale ($S_{min}$) du corps discoïde étant située à une distance radiale des bords (11, 12) qui relient les faces latérales (9, 10) au moyeu (4) qui est plus courte que la moitié de l'étendue radiale ($R_d$) des faces elles-mêmes, ledit corps discoïde (8) étant symétrique par rapport à un plan médian (M),
l'épaisseur minimale ($S_{min}$) du corps discoïde (8) étant située sensiblement aux bords (11, 12) qui relient les faces latérales (9, 10) au moyeu (4),
les faces externes (9, 10) ayant un profil de section qui est droit et divergeant à partir de l'épaisseur minimale ($S_{min}$) en direction de la surface de soudage périphérique (15),
**caractérisé par le fait que**
le moyeu (4) a une longueur ($L_m$) qui est sensiblement égale à la largeur ($L_s$) de la surface de soudage périphérique (15).

**2.** Sonotrode selon la revendication 1, dans lequel l'épaisseur (S) du corps discoïde (8) augmente radialement vers l'extérieur au-dessus de l'épaisseur minimale ($S_{min}$), jusqu'à une valeur correspondant à la largeur de la surface de soudage périphérique (15).

**3.** Sonotrode selon l'une quelconque des revendications 1 ou 2, dans lequel l'épaisseur (18) de la surface de soudage périphérique (15) est une partie des faces externes (9, 10) du corps discoïde (8).

**4.** Sonotrode selon l'une quelconque des revendications précédentes, dans lequel le moyeu (4) a une forme cylindrique ayant un rayon constant.

**5.** Sonotrode selon la revendication 4, dans lequel chaque face dudit corps discoïde a un diamètre de 45 mm et l'épaisseur minimale ($S_{min}$) du corps discoïde est située à 16,5 mm de l'axe de rotation, et dans lequel lesdites surfaces de soudage ont une longueur de 32 mm.

**6.** Sonotrode selon l'une quelconque des revendications 1 à 3, dans lequel le moyeu (4) a une forme tronconique s'élargissant en direction des extrémités libres du moyeu (4).

**7.** Sonotrode selon la revendication 6, dans lequel chaque face dudit corps discoïde a un diamètre de 45 mm et l'épaisseur minimale ($S_{min}$) du corps discoïde est située à 9,5 mm de l'axe de rotation, et dans lequel lesdites surfaces de soudage ont une longueur de 32 mm.

Fig. 1

Fig.3

Fig.2

Fig.6

Fig.5

Fig.4

- ARTE NOTA -

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0468125 A
- EP 0457187 A

- US 3017792 A